# EUROPEAN PATENT SPECIFICATION

(11) **EP 3 370 517 B1**
(45) Date of publication and mention of the grant of the patent: **14.06.2023**
(21) Application number: 16862536.6
(22) Date of filing: 07.11.2016
(51) Int. Cl.: A01M 23/38, A01M 19/00, A01M 23/14

(54) **A TRAP OR DISPENSING DEVICE**
FALLE ODER AUSGABEVORRICHTUNG
PIÈGE OU DISTRIBUTEUR

(30) Priority: 05.11.2015 NZ 15713957
(43) Date of publication of application: 12.09.2018
(73) Proprietor: Redmayne, John Michael, Palmerston North 4479 (NZ)
(72) Inventor: Redmayne, John Michael, Palmerston North 4479 (NZ)
(74) Representative: FRKelly
(86) International application number: PCT/NZ2016/050178
(87) International publication number: WO 2017/078547

(56) References cited:
- WO-A2-2007/123755
- US-A- 5 269 091
- US-A- 6 088 948
- US-A1- 2005 235 553
- US-A1- 2005 235 553
- US-A1- 2010 134 301
- US-A1- 2010 134 301
- US-A1- 2011 056 117
- US-B1- 6 445 301

## Description

### FIELD OF THE INVENTION

The present invention relates to a trap or dispensing device.

### BACKGROUND TO THE INVENTION

Management of ecosystems, farming systems, pest control and so forth can require a number of tasks to be performed to control target creatures, such as pests. These tasks may include traps to kill the target creatures, dispensing devices to dispense poison or medication, and dispensing devices to dispense lure to attract target creatures for monitoring or observation.

However, many traps and dispensing devices (see for example US 2010/134301) typically require a regular program of maintenance by a worker. For example, in the case of a kill trap, the trap needs to be checked regularly to remove any dead creatures, to reset the trap and replace the lure.

Similarly, known dispensing devices frequently need to be monitored to remove old lure and replace that with fresh lure. This can be a time consuming and therefore costly process. Furthermore, there is a need to improve the operational availability and service life of components in traps and dispensing devices.

It is an object of the invention to provide a trap or dispensing device that goes at least some way towards overcoming the disadvantages of the prior art, or that at least provides the public with a useful alternative.

### SUMMARY OF THE INVENTION

The object of the invention is achieved by means of a system according to claim 1 and a method according to claim 9. Preferred embodiments are presented in the dependent claims.

Embodiments of systems, devices, and components will now be described with reference to the accompanying figures, wherein like numerals refer to like or similar elements throughout. Although several embodiments, examples and illustrations are disclosed below, it will be understood by those of ordinary skill in the art that the inventions described herein extend beyond the specifically disclosed embodiments, examples and illustrations, and can include other uses of the inventions and obvious modifications and equivalents thereof. The terminology used in the description presented herein is not intended to be interpreted in any limited or restrictive manner simply because it is being used in conjunction with a detailed description of certain specific embodiments of the inventions. In addition, embodiments of the inventions can comprise several novel features and no single feature is solely responsible for its desirable attributes or is essential to practicing the inventions herein described.

Certain terminology may be used in the following description for the purpose of reference only, and thus are not intended to be limiting. For example, terms such as "above" and "below" refer to directions in the drawings to which reference is made.

Terms such as "top", "bottom', "upper", "lower", "front", "back", "left", "right", "rear", and "side" describe the orientation and/or location of portions of the components or elements within a consistent but arbitrary frame of reference which is made clear by reference to the text and the associated drawings describing the components or elements under discussion. Moreover, terms such as "first", "second", "third", and so on may be used to describe separate components. Such terminology may include the words specifically mentioned above, derivatives thereof, and words of similar import.

The term "comprising" as used in this specification means "consisting at least in part of". When interpreting each statement in this specification that includes the term "comprising", features other than that or those prefaced by the term may also be present. Related terms such as "comprise" and "comprises" are to be interpreted in the same manner

Reference to any prior art in this specification does not constitute an admission that such prior art forms part of the common general knowledge.

### BRIEF DESCRIPTION OF THE DRAWINGS

Further aspects of the present invention will now be described by way of example only, and without intending to be limiting, with reference to the accompanying drawings, in which:
**Figure 1** is a cut away side view of one form of compressed gas and solar powered resetting trap with a piston connected strike member and a compressed gas driven lure metering system;
**Figure 2** is a schematic diagram of one form of electronically controlled test activation or lure actuating system;
**Figure 3** is a perspective view of a collapsible lure storage vessel and a lure metering device according to a further embodiment;
**Figure 4** is a schematic diagram of a lure storage vessel and a lure metering system comprising two control valves according to a further embodiment;
**Figure 5** is a schematic diagram of the device of Figure 24 with the two control valves in different positions;

It is noted that the drawings presented herein are not drawn to scale, that not all components or fluid lines are necessarily shown in particular views or perspectives and that the attachment of components to frames or housings is not always detailed.

### DETAILED DESCRIPTION

Trap or dispensing devices left deployed for long periods of time can become prone to failure due to the lack of use of device components such as mechanical linkages, springs, motors, gear boxes, pulleys, seals, and the like. For example, components may bind or corrode together or to themselves (e.g. springs rusting), deform (e.g. seals left fixed in one position for a long time), or lose their strength (e.g. unused springs). To prolong the operational availability of such components a regular test activation of the device is desirable. Traps may include camera traps, live capture traps, kill traps and resetting kill traps. Dispensing devices may present poison baits, spray or inject poisons or dispense food supplements or medication to target creatures. A lure may be presented with poison in it, or may contain no poison but be used as an attractant to enable the device to apply a poison by other methods. Target creatures for trap or dispensing devices may include a mouse, rat, stoat, weasel, possum, rabbit, bird, toad, lizard, snake or other pest.

In another form activation of the trap or dispensing device may also cause the device to dispense a metered amount of lure, so in this form a test activation may be initiated as a way of also dispensing fresh lure from or into the device (a lure refresh). Additionally or alternatively, the system activation instructions may thus comprise lure refresh instructions, under which the control system causes the activation of the trap or dispensing device to dispense fresh lure at a lure outlet. A test activation and a lure refresh may involve the activation of the same, some of the same, or different components of the trap or dispensing device.

Where the trap or dispensing device is powered by compressed gas, the energy in the exhaust gas from activating the device can be harnessed to also drive a lure metering system. Where activation of a trap or dispensing device causes a part in that device to move, the energy from that movement can be harnessed to power the device's lure metering system.

In one form, a lure metering system comprises a rotary driven pump, such as a peristaltic pump, a gear pump, a lobe pump, a circumferential piston pump, a screw pump, a vane pump, a centrifugal pump, a flexible impeller pump, or the like. The rotary driven pump is driven from a rotatable component of the trap or dispensing device, such as a pulley, an axle, a cog, a gear, a pinion, a wheel, or an electric motor.

In another form, the lure metering system comprises a linearly driven pump such as a piston pump, a diaphragm pump, a plunger pump, or the like, that is driven by a linearly moveable component of the trap or dispensing device. The linearly moveable component may comprise a piston, a slide, a linear actuator, or a rack for example.

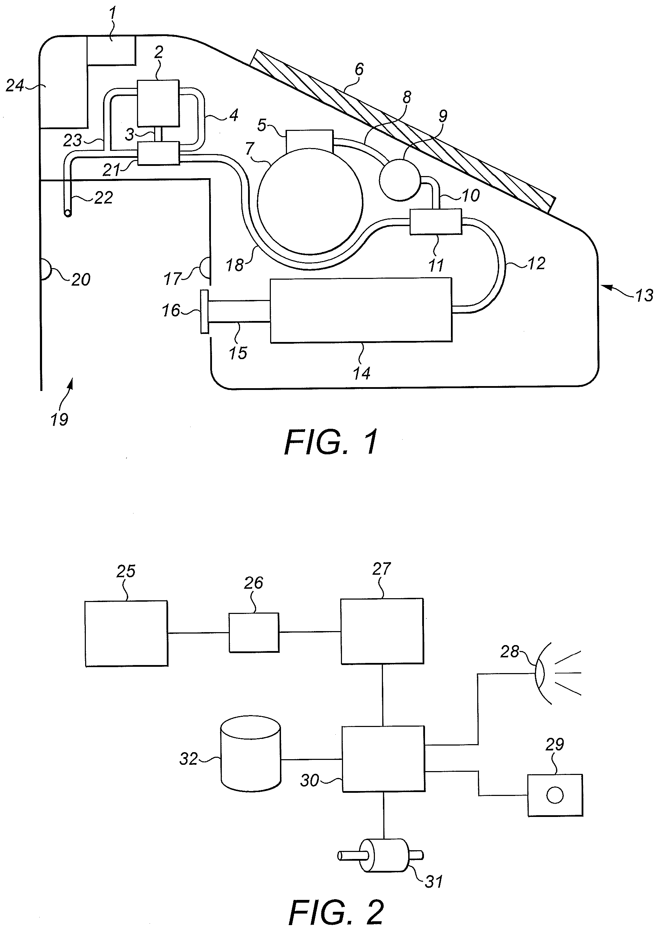

In one form, as shown in Figure 2, a trap or dispensing device may comprise an electronically controlled test activation system. The trap or dispensing device comprises a power supply, which is preferably but not necessarily a rechargeable power supply. In one form, an energy harvesting device, such as a solar panel 25, is configured to charge a power supply in the form of one or more batteries 27. If necessary, a charge control system 26 may be used to protect the one or more batteries 27 from damage. The electricity from the one or more batteries 27 powers an electronic control system 30 and various other electrical components that form part of the trap or dispensing device.

The electronic control system 30 is programmed to implement system activation instructions, which may be remotely supplied to the control system via wireless communication, may be stored in at least one memory 32 of the control system or may be provided by a timer module in the device. The memory 32 may comprise a computer readable memory, such as a memory card, a USB memory stick, flash memory, or the like. In one form, the control system comprises a micro-controller with inbuilt memory 32. The system activation instructions may comprise test activation instructions, under which the control system causes the activation of moveable components of the trap or dispensing device so as to prolong the operational availability of these components and the device (i.e. to encourage regular movement of the various components to help prevent the components from seizing up or corroding together). The activation instructions may be implemented by the control system 30 by sending electrical signals to components of the trap or dispensing device. In one form, the trap or dispensing device comprises a solenoid actuator 31, which is configured to receive signals/instructions from the control system. The control system may be programmed to implement activation instructions periodically at random or predetermined time intervals, as a result of a trigger (such as a sensor input or creature activated trigger), as a result of a remote input from a remote user interface, or according to other programmed criteria. In one form, the control system may be programmed to initiate a test activation only after a predetermined time has elapsed since a preceding activation of the trap or dispensing device has occurred. In another form the control system is a timer circuit that is reset after an activation of the device.

In one form, the trap or dispensing device may comprise two or more different lure storage vessels, each containing a different lure. The control system may be programmed to initiate a test activation or a lure refresh from either lure storage vessel or both at a time.

In one form, the time at which a test activation occurs may be stored in the memory 32 of the electronic control system 1. Alternatively or additionally, the trap or dispensing device may comprise a transmitter that is configured to transmit the time of a test activation to another device using any suitable communication system 28. Operation of the transmitter may be controlled by the electronic control system 30. The control system may be programmed to cause the transmitter to transmit data relating to each activation at predetermined time periods and/or after a predetermined number of activations have occurred. Examples of some forms of device that may be configured to receive transmitted time record data from the trap or dispensing device include: a neighbouring trap or dispensing device; a mobile device carried by a nearby person; a drone; a long range receiver; a computer; or a control centre, which may comprise one or more computers and/or storage mediums for receiving and storing data transmitted from the trap or dispensing device.

The communication system 28 may employ wireless technology such as, without limitation, Bluetooth, WiFi, ZigBee, mobile telephony, or the like. Neighbouring traps or dispensing devices may be wirelessly connected in a mesh network. In turn, networked devices can communicate with a control centre or hub that has long range communication capability, such as via mobile telephony or a satellite link. Any suitable form of transmission may be employed by the communication system 28, such as direct or indirect transmission. An example of an indirect transmission is where the data is passed via one or more other networks before being received by the control centre.

In a further embodiment, a control centre may be configured to receive activation data transmitted by a trap or dispensing device where the activation data records the time of each activation (the activation being a test activation or not a test activation) and/or the type of activation (i.e. whether the control system activated a test activation or a creature activation), for one or more trap or dispensing devices. In one form, the control centre may comprise a self-resetting trap management system or a dispensing device management system.

The control centre may be configured to receive activation data for a trap or dispensing device activation whether the activation is automatically triggered, such as by a target creature actuating a trigger (which may be a sensor or trip wire, for example) or whether the activation is a test activation undertaken on a periodic basis. For each trap or dispensing device, the control centre may be configured to monitor its performance by comparing a time of the latest activation, or a current time, with a time of the most recent previous activation in order to classify the performance of the trap or dispensing device into one of the following categories:
a) where an activation occurs prior to the time of the next scheduled test activation, the control centre may classify the device as a 'creature activated';
b) where an activation occurs at the scheduled time of a test activation, the control system may classify the device as a test activated'; or
c) where an activation fails to occur at the scheduled time of a test activation, the control system may classify the device as 'faulty'.

The control centre may be configured to display data relating to the performance of one or more trap or dispensing devices on a user interface. The control system may also be configured to display identification data relating to each trap or dispensing device. The identification data may comprise a serial number attached to the system or to the trap or dispensing device comprising the system. Additionally, or alternatively, the identification data may also comprise location data relating to the location of the trap or dispensing device. In one form, the control centre may also be configured to display historical data relating to the trap or dispensing device. The historical data may provide useful information, such as the maintenance history of the trap or dispensing device and/or where the device is employed as a kill device, the number of kills associated with that device. Depending on the classification of the activation, further investigation into the performance of the trap or dispensing device may be required. In some cases, the trap or dispensing device may require maintenance, repair, removal or replacement if the device is broken. For example, where the control centre identifies a ' faulty device, an alert may be provided on the user interface, which then alerts a responder to visit or retrieve the trap or dispensing device for further inspection and, if necessary, maintenance or replacement. As another example, where the control centre classifies a device activation as a 'creature activation' and the device is employed in a kill device, it is likely that a creature has been killed by the device and a responder may be delegated to attend the device for visual confirmation, identification and possible removal of the creature. A responder may be a person, a drone or other automated device.

An advantage of providing a control centre/management system to receive data from one or more trap or dispensing devices that are automatically test activated, is that minimal data is required to be transmitted from the lure dispensing systems. This provides savings in data processing, transmission, and power requirements of the devices deployed in the field. A device only has to report its identity or location and the time it was activated. The device does not need to report on the type of activation (i.e. whether it was a test activation or a creature activations) or whether it is in a faulty state. The control centre/management system is able to combine the data it receives from the devices with information it holds on each device's previous activation time and each device's scheduled test activation times to determine the performance and status of each device.

Another advantage is that the control centre is able to analyse the performance of the one or more trap or dispensing devices to identify areas of high or low creature activations and to provide an early indication of any potential problems with individual devices, such as when the control centre issues an alert that a particular device has failed to report an expected test activation.

In another form the trap or dispensing devices comprise a processor (such as a microprocessor) configured to receive activation data from the control system; to classify the data as described above according to programmed rules and to output the data to memory or to a transmitter. The control system and processor are configured to communicate with each other so that after the data is classified the data may be stored in memory for transmission to a user interface at a set time period or after a set time period. Alternatively the data may be transmitted immediately to the user interface. In yet another form, the data may remain in the memory and the memory may later be removed and the data downloaded for display on a user interface. The user interface may be any suitable electronic display system, such as a PC, smart phone, tablet, watch, or the like which may be configured to display identification data and/or historical data and/or activation data relating to the trap or dispensing device, as described above in relation to the user interface for the control centre. The processor and control system may be separate components or may be separate operations within the same component, such as a microcontroller for example.

In another form of trap or dispensing device, the electronic control system 30 is configured to cause a digital imaging device 29 to take at least one digital image of an area of the trap or dispensing device or lure dispensing system proximately before, during and/or proximately after a test activation and to store the one or more digital images in memory 32. The digital imaging device 29 may be, without limitation, a still camera, a video camera, an infrared camera, a thermal imaging camera, or the like and may form part of the trap or dispensing device. A suitable lighting system may be used with the digital imaging device 29 to illuminate the area being photographed, such as LEDs or infrared LEDs.

In a further form, the one or more digital images taken by the digital imaging device 29 may be transmitted by a transmitter, under the direction of the electronic control system 30, via a communication system 28 to other devices, such as a neighbouring trap or dispensing device, a mobile device carried by a nearby person, a drone, a long range relay transmitting device or a control centre/central management system. In one form, neighbouring devices may be wirelessly connected in a mesh network.

In a further embodiment, the trap or dispensing device may comprise a processor configured to process the at least one digital image and a transmitter configured to transmit the at least one processed image to an external device. In one form, one or more digital images taken by the digital imaging device 29 are processed by the electronic control system 30 prior to being transmitted via a communication system 28. This might be done, for example, to reduce the number and size of transmissions. For example, the control system may compare digital images taken of an area proximately before, during and/or proximately after a test activation and/or a lure refresh with digital images of the same area stored in the memory 32. The control system may be programmed so that only images that differ by more than a predetermined threshold are transmitted. Other images may be kept stored in memory, at least for a predetermined period of time, or deleted. In another form, the control system may be programmed to only transmit parts of a digital image that differ from an earlier digital image of the same area that is stored in the memory 32 where the two images differ by more than a predetermined threshold.

In other embodiments, data and/or digital images of creature activations may be also captured by the electronic control system 30 and/or digital imaging device and stored in memory 32 and/or transmitted via the communication system 28 to another device, control centre, or user interface.

Data displayed on the user interface may comprise identification data, location data, historical data, and/or operational data relating to one or more trap or dispensing devices and/or may comprise an alert indicating that a trap or dispensing device requires maintenance, repair or replacement, or attendance to a creature.

In a further embodiment, the communication system 28 may comprise a receiver (as well as or instead of a transmitter) configured to receive activation instructions, such as test activation and/or lure refresh instructions, from other devices, such as a neighbouring trap or dispensing device, a mobile device carried by a nearby person, a drone, a long range transmitting device or a control centre/management system. This embodiment provides the ability for a network of devices to be test activated and/or lure refresh activated in a co-ordinated manner in accordance with management objectives. For example, a lure refresh of a device network may be co-ordinated to occur for all trap or dispensing devices in a particular area at a particular time that is considered optimal for attracting target creatures having regard to the time of the day, light levels, weather conditions, the characteristics of the target creatures, etc. Neighbouring devices may be connected in a mesh network.

In one form the control system may apply other sensor input or decision rules, for example, a light sensor input may be used to control that a test activation or a lure refresh may only be allowed to occur during daylight or during night time. Similarly, other sensor inputs may be used to only allow a test activation or a lure refresh if the humidity is above or below a predetermined threshold; if the air temperature is above or below a predetermined threshold, if the barometric pressure is above or below a predetermined threshold or is rising or falling at a predetermined rate of change; if the wind speed is above or below a predetermined threshold and/or during certain phases of the moon. In addition, a test activation or a lure refresh may be prevented or deferred from occurring if a sensor detects that a creature is already in or near the trap or dispensing device. This feature is preferable to prevent inhumane kill or injury of such a creature.

In one form, the lure dispensing system of a trap or dispensing device harvests the energy used to activate or reset the trap or dispensing device to power the lure dispensing system. In one alternative of this form the lure dispensing system utilises the exhaust gas from the device to power the lure metering system, an electronic control system connected to a control valve that is in fluid communication with the exhaust gas for the device, at least one sensor in communication with the electronic control system, and a lure metering system and comprising at least one lure storage vessel, a lure metering device, and at least one lure outlet. The lure metering system is configured to be powered by the exhaust gas supply to draw lure from the lure storage vessel and to dispense the drawn lure through the at least one lure outlet when the trap or dispensing device is activated to allow exhaust gas to pass to the lure metering system. Preferably, the lure metering system is configured to dispense controlled amounts of lure at the lure outlet(s).

In one form, the lure dispensing system also comprises a support structure, which may be configured to support one or more components of the dispensing system, such as the lure actuating system. In another form, the lure dispensing system may be configured to be attached to a support structure.

The power supply may be mains power or battery power. Where the power supply comprises one or more batteries, the batteries may be configured to be rechargeable. In one form, the lure dispensing system may comprise or be connected to at least one solar panel configured to recharge the one or more batteries. Optionally, the solar panel(s) charge(s) the one or more batteries via a charge control system.

The support structure may be of any suitable form for supporting components of the lure dispensing system, such as a frame or housing.

In one form, the lure dispensing system may be provided in a kill trap comprising a strike member and a strike member actuation system connected to the gas supply via the control valve. The control system may be configured to open the control valve to allow gas to flow from the gas supply to the strike member actuation system to move the strike member from a set position to a strike position. The control system may also be configured to close the control valve to the strike actuation system and to allow exhaust gas to pass from the strike member actuation system to the lure metering system to power the lure metering system to draw lure from the lure storage vessel and to dispense the drawn lure through the at least one lure outlet. The control system may be configured to operate the control valve based on at least one signal from a trigger that is wired or wirelessly connected to the control system. For example, the trigger may comprise at least one or more sensors, such as a sensor configured to generate a signal to the control system when an object, such as a target creature is within a strike zone of the trap. In another form, the trigger may be a signal sent from a remote user interface operated by a person. In this form, the signal may be wirelessly communicated to and received by the control system. Other forms of trigger may alternatively be used within departing from the scope of the claims. In another form the exhaust gas from the strike member actuation system may bypass the control valve and flow directly to the lure metering system.

In one form, as shown in Figure 1, the lure dispensing system is located within a gas powered kill trap comprising a housing 13 on which is mounted a solar panel 6 connected to one or more batteries configured to power an electronic control system 1 and a pair of sensors 17, 20 in communication with the control system 1. The housing 13 comprises an opening 19 through which a target creature may at least partially enter the housing. For example, a target creature may poke its head through the trap opening to investigate a lure at a lure outlet 22. In one form the opening 19 is provided at the bottom of the trap. The housing may also comprise a lid or other access aperture to facilitate access to the interior of the housing for servicing of the trap.

The kill trap comprises a strike member 16 configured to be moved between a set position, in which the strike member is ready to strike, and a strike position, in which the strike member has moved into or through a strike zone within the housing to kill a target creature. The strike zone is located in the region of the lure outlet as this is the area where the head of a target animal is most likely to be when the strike member is activated (moved from the set position to the strike position). In the embodiment shown, the strike member may be moved by a pneumatic piston, such as a single acting spring return pneumatic piston, which may be connected to or integral with the strike member. For example, where the strike member is integral with the piston, a free end of a piston rod 15 of the piston may be configured to extend from and at least partially retract into a piston housing 14 and may comprise an end surface 16 that forms a strike member.

The trap also comprises a gas storage vessel 7 in which compressed gas, such as carbon dioxide, is stored under a high pressure. Gas may pass through regulator 5 along a primary fluid flow path from the gas storage vessel to a control valve 11. A reservoir 9 may be located on the primary fluid flow path, as shown in Figure 1. In this arrangement, the primary fluid flow path comprises a first fluid line 8 that connects the gas storage vessel 7 to the reservoir and a second fluid line 10 that connects the reservoir to the control valve. Gas may also flow along a third fluid line 12 that connects the control valve 11 to the pneumatic piston and a fourth fluid line 18 that connects the control valve to a lure metering system 21. In this arrangement, the gas storage vessel is connected to the pneumatic piston through a first fluid flow path (comprising the primary fluid flow path, control valve and third fluid line) and to a lure metering system through a second fluid flow path (comprising the primary fluid flow path, control valve and fourth fluid line). Thus, the first and second fluid flow paths intersect at the control valve 11.

The trap may also comprise a regulator in fluid communication with the gas storage vessel 7 to reduce the pressure of gas exiting the gas storage vessel. In the embodiment shown, the regulator 5 is connected to the gas storage vessel 7. In this arrangement, gas at a reduced pressure may pass along the first fluid line 8 to the reservoir 9. The pressure to which the gas may be reduced may be selected based on the operational requirements of the trap, having regard to the creatures being targeted and the components and systems being used in the trap. A pressure in the range of 3.45 to 8.62 bar (50 to 125 psi) may be suitable in some instances.

The control valve 11 is configured to be actuated by the control system 1 to control flow along fluid flow lines 12 and 18. In one form, the control valve comprises a solenoid valve controlled by signals from the electronic control system 1. In another form, the control valve may comprise a pneumatically piloted valve with the pilot signal provided by a bleed trigger valve, such as a Clippard MWV-1 whisker valve.

In one form, the control system may be configured to operate the trap in at least two modes: a standby mode and an active mode.

When the trap is in a standby mode, the control valve 11 blocks the flow of gas from the reservoir 9 and allows exhaust gas to flow from the piston to the lure metering system 21 by flowing along the third fluid line 12, through the control valve 11, and along the fourth fluid line 18.

The trap may also comprise one or more sensors configured to detect when a target creature is in the strike zone. (i.e. in a position suitable for the strike member 16 to be activated). In the embodiment shown in Figure 1, the trap comprises two sensors 17 and 20 in the form of a paired infrared transmitter and receiver.

When the trap is in the standby mode, the control system 1 may cause the sensors 17 and 20 to continuously or periodically operate in order to sense an object, such as a target creature, within the strike zone. When an object breaks an infrared beam passing across the strike zone and between the two sensors 17, 20 then one or both sensors may generate a signal that is communicated to the electronic control system 1. The control system is configured to cause the piston (and therefore the strike member 16) to be activated by opening the control valve 11 to allow pressurised gas to flow from the reservoir 9 via fluid lines 10 and 12 to the piston 14 and to block the flow of gas from the control valve along the fourth fluid line 18.

The pressurised flow of gas to the piston causes the piston rod 15 to extend from the piston housing 14 and hence urges the strike member 16 into the strike zone and optionally toward a clamping surface. In one form, an interior surface of the housing 13 opposite the strike member 16 may form a clamping surface against which the strike member 16 may be configured to compress a target creature. Therefore, the pressurised gas may be used to drive or power the strike member to move from the set position to the strike position.

While the piston rod 15 is held extended, the gas pressure in the piston 14 will equalise with the gas pressure of the reservoir 9, which in turn will rise to a pressure allowed by the regulator 5. The strike member may be returned to the set position by the electronic control system 1 causing the control valve 11 to close the fluid flow path between the reservoir 9 and the piston and to allow the pressurised gas in the piston to exhaust along the fourth fluid line 18 to the lure metering system 21. A return spring inside the piston allows the strike member 16 to be reset to the set position by causing the piston rod 15 to retract, at least partially, into the piston housing 14.

As the strike member is being reset, a pulse of pressurised gas flows from the piston along the third and fourth fluid lines 12, 18 to the lure metering system 21. The pressurised gas may be used to drive or power the lure metering system that forms part of the lure dispensing system. In other words, the lure dispensing system of the present invention may use a pressurised gas exhaust flow to cause a lure metering system to dispense a metered quantity of lure drawn from a lure storage vessel 2.

Any suitable form of lure metering system may be used with the dispensing system of the present invention to measure or otherwise provide a metered amount of lure to the lure outlet of the dispensing system.

In one form, the lure metering system 21 is in fluid communication with a lure storage vessel 2, either by being directly attached to the lure storage vessel 2 or through a lure feed line 3, so that lure can exit the lure storage vessel and pass through the lure metering system from which a metered amount of lure can exit the lure metering system and be pushed to the lure outlet 22. In one form, the lure may be pushed out of the lure outlet 22, such as on to a lure tray, or the lure may remain at the outlet for a target creature to feed from the lure at the outlet 22.

The pressurised gas may pass from the lure metering system 21 via a fifth fluid line 4 to the lure storage vessel 2. The pressurised gas may then flow from the lure storage vessel 2 through the sixth fluid line 23 to the lure outlet 22.

Therefore, the pulse of pressurised gas flowing through the lure metering system 21 and the lure storage vessel 2 causes:
a) Blowing of old lure out of the lure outlet 22,
b) Dispensing of fresh lure to the lure outlet 22,
c) Introduction of pressurised gas to the lure storage vessel 2, hence facilitating the flow of lure to the lure metering system 21 and providing,
d) Reduction of the gas pressure in the lure metering system 21 and the lure storage vessel 2 as the gas pressure reduces to be substantially at atmospheric pressure or to at least be closer to atmospheric pressure.

When old lure is blown out of lure outlet 22, that lure is dispensed inside the trap housing near the opening 19 and/or outside and below the trap. The process of blowing out old lure also agitates the old lure to some extent and thus releases the lure scent to attract target creatures to the trap or dispensing device. This 'pre-feeding' or 're-luring' effect can be used to advantage in managing the trap or dispensing device, such as by implementing a periodic lure refresh.

A key advantage of the lure dispensing system of the invention is that the lure storage vessel 2 may provide a low ionisation environment in which the lure may be kept fresh for longer, especially if a gas with high ionisation potential, such as carbon dioxide or argon, is used.

The angles at which components of the lure dispensing system are connected and the use, if necessary, of check valves, relief valves and/or regulators may be configured to prevent backflow and/or unsafe pressure in the lure metering system. Furthermore, the order in which these components are connected in series may be varied, and/or they may be connected in parallel, so as to still achieve the effects described above.

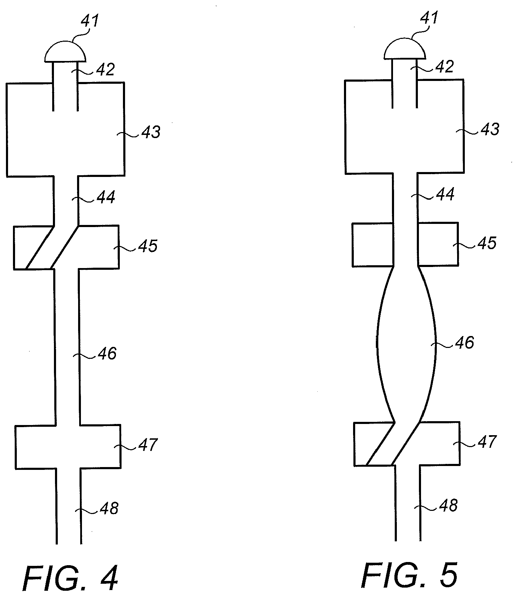

In one form, the lure metering system 21 can be configured to delay the dispensing of fresh lure until the gas pressure in the lure storage vessel 2 has largely or completely dissipated, so that some of the fresh lure remains at the lure outlet 22. In one embodiment, the lure metering system 21 comprises a pneumatic diaphragm pump. In another embodiment, the lure metering system 21 comprises a pneumatic bellows pump. In a further embodiment, the lure metering system 21 may comprise the apparatus depicted in Figures 4 and 5 and as described further below.

Although the gas powered lure dispensing system of one embodiment of the present invention has been described and illustrated in Figure 1, as being used in relation to a compressed gas powered trap comprising a piston driven strike member, it should be appreciated that this is just one example for use. The lure dispensing system may be used with any suitable gas powered trap comprising any suitable form of strike member. Furthermore, the lure dispensing system of the present invention may be used in a poisoned lure dispensing trap or a lure dispensing apparatus to attract target creatures for monitoring and/or observation. In these embodiments, a gas powered strike member is not necessary. Instead, in one form, an electronic control system may be in communication with a control valve connected to a gas supply and a lure metering system, which is in turn connected to a lure storage vessel and a lure outlet. The control system may be configured to control the flow of gas from the gas supply to the lure metering system by opening or closing the control valve. When the control valve is opened, gas may flow to the lure metering system to drive the metering system and cause lure to be dispensed. When the control valve is closed, gas may be prevented from flowing to the lure metering system so that no lure is dispensed. A trigger, such as a sensor or switch, may be used to indicate to the control system when to open and close the control valve. In other forms, the control system may operate on a timer so that the control valve is opened and closed at regular time intervals. In yet other forms, the control system may be remotely controlled so that a user may determine when the control system causes the control valve to open and close. As would be appreciated by a person skilled in the art, other suitable configurations of gas powered lure dispensing apparatus may also be used without departing from the scope of the claims.

In another form a lure dispensing system is configured to dispense a lure for attracting a target creature. The lure dispensing system may be employed in a kill trap for killing a target creature; a capture trap for capturing a target creature; a bait station or applicator for poisoning or medicating a target creature; or a monitoring station for attracting a target creature for monitoring purposes (such as for photographing, visually monitoring, weighing, or otherwise observing the target creatures attracted by the lure dispensing system.

The lure dispensing system of the invention may be automated so that lure is automatically dispensed. The system may comprise an electronic control system and a lure metering system that is connected to the control system through either a wired or wireless connection. In some forms, the control system may comprise a clock and/or a memory. In one form, the control system may be configured to cause the lure metering system to dispense fresh lure after old lure has been removed (such as by consumption by a target creature). In this form, the lure dispensing system may comprise one or more sensors configured to send a signal to the control system upon removal of the lure. Upon receiving one or more signals from one or more sensors, the control system may cause the lure metering system to dispense fresh lure. The control system may be programmed to follow dispensing decision rules. These rules may mean that lure is not dispensed every time a sensor signal is received. Instead, a predetermined number of signals may be required within a predetermined time period before the control system activates the lure metering system. Alternatively, the control system may be programmed to activate the lure metering system after a certain time period has passed since the last sensor signal was received. In another form, the control system may be configured to cause the lure metering system to dispense fresh lure periodically, such as at random or predetermined time intervals. In another form, the control system may be configured to cause the lure metering system to dispense lure only during daylight or only at night when there is no daylight. This form of lure dispensing system may comprise a light sensor in communication with the control system and may be particularly suited for attracting non-nocturnal or nocturnal target creatures, respectively. Other forms of decision rules may be used with the control system to control the lure metering system of the present invention, depending on the purpose of the dispensing system and the characteristics of the target creature.

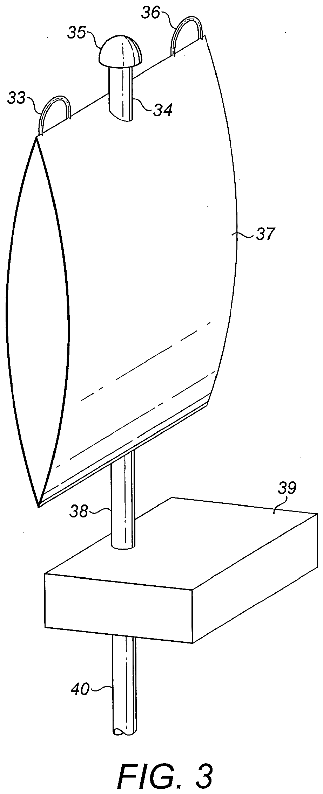

In one form, a lure dispensing system may comprise a lure storage vessel that is collapsible as lure is dispensed by the lure dispensing system. Such a vessel may be particularly useful to reduce oxidation of the remaining lure held within the lure storage vessel. For example, as shown in Figure 3, a collapsible lure storage vessel 37, which is sealed off from the atmosphere and is configured to collapse as a lure is dispensed from it, may be used in a lure dispensing system.

The collapsible lure storage vessel may comprise a flexible material and may be configured to hold lure therein. The lure storage vessel also comprises an opening through which lure may exit the vessel and is configured to at least partially collapse as the lure exits the vessel.

The collapsible lure storage vessel 37 is made from a flexible material that can hold the lure without leaking and that can collapse inwards as lure is dispensed. Suitable materials may include aluminium foil, vinyl, soft and flexible plastics, and laminates or combinations thereof. In one form, the lure storage vessel is made of a material or includes a layer of material that excludes light from the interior of the lure storage vessel, to prolong the life of the lure by reducing any deterioration of the lure that might be caused by exposure to light. In a further embodiment, the lure storage vessel may be placed within a vessel housing or may be placed within a device, such as a trap, that comprises a housing configured to restrict light reaching the lure storage vessel.

The lure would typically, but not necessarily, be a liquid or a paste.

In one form, the collapsible lure storage vessel 37 may be configured to be suspended from a support structure, such as a frame or housing, for example. To suspend the lure storage vessel from the support structure, the vessel may comprise one or more attachment members, such as loops, apertures, hooks, or the like that are configured to engage with complimentary hooks, loops, or apertures provided on the support structure. In one form, as shown in Figure 3, loops 33 and 36 form part of or are attached to the collapsible lure storage vessel 37 and provide attachment members for attaching the collapsible lure storage vessel 37 to a support structure. In another form, the collapsible lure storage vessel may be supported by a support structure, such as by resting on a supporting surface or being placed within a supporting frame, container, or other structure.

The collapsible lure storage vessel 37 may comprise a second opening, such as a filling spout 34, so that additional lure may be added to the collapsible lure storage vessel 37, preferably while excluding as much air as possible from within the lure storage vessel 37. The filling spout 34 may comprise a recloseable opening 35 that is opened to add more lure and then closed afterwards. Preferably, the amount of air in the collapsible lure storage vessel 37 is minimised to reduce oxidation of the lure within the lure storage vessel 37. Optionally, the filling spout 34 comprises a lid, which may be in the form of a push on or screw on cap for example, that can be removed or attached to open and close the spout respectively. In another form (not illustrated) the filling spout is fitted to the lure storage vessel where it is joined to a first feed line 38.

The lure dispensing system 39 may be configured to draw lure from the collapsible lure storage vessel 37, such as via the first feed line 38, and dispense the lure at the lure outlet 40, using pressure, a lure metering system, or any other suitable means to move lure from the lure storage vessel to the lure outlet. In one form, the lure may pass from the first feed line, through the lure metering system and then to the lure outlet 40 or to a second feed line connected to at least one other component so that lure flows through the at least one other component before being dispensed through the lure outlet 40. In one form, the lure dispensing system comprises a lure metering system that causes the lure to be drawn from the lure storage vessel and dispensed from the lure outlet in a metered amount.

The lure may be dispensed within or outside of the support structure that supports the lure dispensing system, depending on the function of the lure in that device. For example, the purpose of the lure dispensing system may be to attract target creatures into a trap, in which case the lure may be dispensed into a strike zone of the trap. The strike zone is an area in which a strike member of the trap may strike a target creature, typically as the target creature is taking or nearing the lure. Alternatively, if the purpose of the lure dispensing system is to attract target creatures to the lure for another purpose, such as for taking a photograph of the creature, the lure may be dispensed at a suitable location at which the camera lens can capture the creature by photograph. If the purpose of the lure dispensing system is to attract target creatures to the lure to poison the creatures, then the lure may be dispensed in any location that is readily accessible to that target creature. In some forms, the lure dispensing system may include, or may be used in conjunction with, a lure shroud or the like that is configured to allow a target creature to access the poisoned lure but that makes it difficult or impossible for non-target creatures to access the poisoned lure.

Various forms of lure metering systems may be used with lure dispensing systems. The various lure dispensing systems described herein may be combined with other types of lure storage vessel other than a collapsible lure storage vessel. A high level of precision or accuracy is not necessary for the lure metering system, although sufficient precision to enable reliable forecasting of lure usage is desirable.

In one form, a DC motor may be used to drive a pump as the lure metering device. The motor may be powered by a rechargeable battery, which may be recharged using a charge control system and solar panel for example.

In one form, the lure metering system 39 comprises a rotary driven pump, such as a peristaltic pump, driven by an electric motor connected to a control system operative to run the pump for a pre-determined amount of time or a pre-determined number of revolutions (which may include a fraction of a revolution) on a periodic basis. For example, a DC motor may be run for a set time or a DC stepper motor may be run for set number of revolutions (which may include a fraction of a revolution). In this arrangement, a precisely metered amount of lure may be dispensed on a periodic basis so that fresh lure is continuously presented over a long period of time.

One form of lure metering system that may be used with a lure dispensing system is shown in Figures 4 and 5. In this form, the lure dispensing system comprises a lure storage vessel 43 and a lure metering system comprising two pneumatically piloted control valves, an upper valve 45 and a lower valve 47. The lure storage vessel 43 is joined to the upper valve 45 by a first lure flow path 44. The upper valve 45 is joined to the lower valve 47 by a second lure flow path 46, which is preferably in the form of an expandable flow path. Lure is dispensed out of the lower valve 47 via a third lure flow path 48. The lure storage vessel 43 can be refilled via a filling spout 42, which may comprise a recloseable lid 41. Only the lure flow paths, and not the compressed gas flow paths or fluid lines, are shown in Figures 4 and 5.

The lure dispensing system of Figures 4 and 5 may be operated in at least two ways to dispense a metered amount of lure in response to a pulse of compressed gas entering the lure metering system. In some embodiments, the pulse of compressed gas is gas exhausted after activation of one or more components or systems in a compressed gas powered trap or dispensing device, where the lure dispensing system forms part of a gas powered trap or lure dispensing apparatus.

In a first embodiment, the lure metering system comprises a lower valve 47 that is normally open and an upper valve 45 that is normally closed. The lure metering system is configured to operate in response to a pulse of compressed gas as follows:
a) Lower valve 47 is closed,
b) Upper valve 45 is opened,
c) Pressurised gas is introduced to the lure storage vessel 43,
d) In this state (as illustrated in Figure 5), lure is forced under pressure into the second, expandable lure flow path 46, which then expands to accommodate the lure,
e) Upper valve 45 is closed,
f) Lower valve 47 is opened, and
g) In this state, lure is dispensed through the third lure flow path 48, causing the expandable lure flow path 46 to contract or at least substantially return to its non expanded state (i.e. from the state shown in Figure 5 to the state shown in Figure 4).

In a second embodiment, the lure metering system comprises a lower valve 47 that is normally closed and an upper valve 45 that is normally open. The lure metering system is configured to operate in response to a pulse of compressed gas as follows:
a) Pressurised gas is introduced to the lure storage vessel 43,
b) In this state (as illustrated in Figure 5), lure is forced under pressure into the second, expandable lure flow path 46, which expands to accommodate the lure,
c) Upper valve 45 is closed,
d) Lower valve 47 is opened,
e) In this state, lure is dispensed through the third lure flow path 48 , causing the expandable lure flow path 46 to contract or to at least substantially return to its non expanded state (i.e. from the state shown in Figure 5 to the state shown in Figure 4),
f) Lower valve 47 is closed, and
g) Upper valve 45 is opened.

In these embodiments, the order of operations can be controlled by an electronic control system and/or by the placement and response settings of control valves and the like, which may be operated by the electronic control system.

Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

## Claims

1. A device comprising
- one or more moveable components and
- either an automatically resetting apparatus configured to trap a target creature or an apparatus configured to automatically dispense a substance to a target creature and
- an automatic test activation system configured to automatically initiate a periodic test activation of the device, wherein
- the automatic test activation system comprises:
- an electric power supply; and
- and an electronic control system (1) powered by the electric power supply, the device being **characterized in that**
- the electronic control system (1) is configured to automatically activate the device to test the operation of the one or more moveable components, by activating these moveable components
and wherein the electronic control system is configured to automatically activate the device periodically based on output from a timer or programmed instructions or both.

2. The device of claim 1, wherein the electronic control system (1) comprises a memory (32) configured to store data relating to each activation of the device.

3. The device of claim 1 or 2, wherein the device comprises a transmitter configured to transmit data relating to each activation of the device.

4. The device of claim 3, wherein the electronic control system (1) is programmed to cause the transmitter to transmit data relating to each activation at predetermined time periods or after a predetermined number of activations have occurred or both.

5. The device of any one of claims 2 to 4, wherein the electronic control system comprises a digital imaging device, and
the electronic control system (1) is configured to cause the digital imaging device to take at least one digital image of an area proximate to the device proximately before, during or proximately after a test activation and, either the electronic control system (1) is configured to store the at least one digital image in the memory (32), or the device further comprises a processor configured to process the at least one digital image and a transmitter configured to transmit the at least one processed image to an external device.

6. A control centre system comprising
- at least two devices according to any one of claims 1 to 5 and
- a management system for managing said at least two devices,
- wherein the management system comprises a processor configured to receive data from one or more of said devices and
- to classify that data as output in order to identify said devices that have been activated by a test activation, that have been activated by other than a test activation or that require maintenance, repair or replacement; and
- wherein the management system also comprises a user interface configured to display the data output by the processor.

7. The control centre system according to claim 6, wherein the data displayed on the user interface may comprise one or more of the following:- identification data, location data, historical data, operational data and an alert indicating that a device requires maintenance, repair or replacement, or removal of a creature from inside or near the device.

8. The control centre system according to 6 or 7, wherein the system comprises a transmitter to transmit data relating to a device to a responder and wherein the data comprises one or more of:- identification data, location data, historical data, operational data and an alert indicating that a device requires maintenance, repair or replacement, or removal of a creature from inside or near the device.

9. A method of automatically and periodically test activating a device according to claims 1 to 5, wherein the device further comprises an electrical power supply and an electronic control system powered by the power supply, and wherein the method comprises the steps of:
powering the electronic control system (1) using the electrical power supply, and
causing the electronic control system to automatically initiate a test activation of one or more moveable components of the device on a periodic basis.

10. The method of claim 9, wherein the electronic control system (1) initiates a test activation only after a predetermined time has elapsed since a preceding activation of the trap has occurred.

## Patentansprüche

1. Vorrichtung, umfassend
- eine oder mehrere bewegliche Komponenten und
- entweder eine sich automatisch zurücksetzende Einrichtung, die dazu konfiguriert ist, eine Zielkreatur einzufangen, oder eine Einrichtung, die dazu konfiguriert ist, automatisch eine Substanz an eine Zielkreatur abzugeben, und
- ein automatisches Testaktivierungssystem, das dazu konfiguriert ist, automatisch eine periodische Testaktivierung der Vorrichtung einzuleiten, wobei
- das automatische Testaktivierungssystem Folgendes umfasst:
- eine elektrische Stromversorgung; und
- und ein elektronisches Steuersystem (1), das durch die elektrische Stromversorgung gespeist wird, wobei die Vorrichtung **dadurch gekennzeichnet ist, dass**
- das elektronische Steuersystem (1) dazu konfiguriert ist, die Vorrichtung zum Testen des Betriebs der einen oder mehreren beweglichen Komponenten automatisch zu aktivieren, indem diese beweglichen Komponenten aktiviert werden,
und wobei das elektronische Steuersystem dazu konfiguriert ist, die Vorrichtung periodisch basierend auf einer Ausgabe von einem Zeitgeber oder programmierten Anweisungen oder beidem automatisch zu aktivieren.

2. Vorrichtung nach Anspruch 1, wobei das elektronische Steuersystem (1) einen Speicher (32) umfasst, der dazu konfiguriert ist, Daten bezüglich jeder Aktivierung der Vorrichtung zu speichern.

3. Vorrichtung nach Anspruch 1 oder 2, wobei die Vorrichtung einen Sender umfasst, der dazu konfiguriert ist, Daten zu senden, die sich auf jede Aktivierung der Vorrichtung beziehen.

4. Vorrichtung nach Anspruch 3, wobei das elektronische Steuersystem (1) dazu programmiert ist, den Sender zu veranlassen, Daten bezüglich jeder Aktivierung in vorgegebenen Zeiträumen oder nachdem eine vorgegebene Anzahl von Aktivierungen stattgefunden hat, oder beidem zu senden.

5. Vorrichtung nach einem der Ansprüche 2 bis 4, wobei das elektronische Steuersystem eine digitale Bildgebungsvorrichtung umfasst, und
das elektronische Steuersystem (1) dazu konfiguriert ist, die digitale Bildgebungsvorrichtung zu veranlassen, mindestens ein digitales Bild eines Bereichs in der Nähe der Vorrichtung unmittelbar vor, während oder unmittelbar nach einer Testaktivierung aufzunehmen, und entweder das elektronische Steuersystem (1) dazu konfiguriert ist, das mindestens eine digitale Bild in dem Speicher (32) zu speichern, oder die Vorrichtung ferner einen Prozessor, der dazu konfiguriert ist, das mindestens eine digitale Bild zu verarbeiten, und einen Sender umfasst, der dazu konfiguriert ist, das mindestens eine verarbeitete Bild an eine externe Vorrichtung zu senden.

6. Steuerzentralensystem, umfassend
- mindestens zwei Vorrichtungen nach einem der Ansprüche 1 bis 5 und
- ein Verwaltungssystem zum Verwalten der mindestens zwei Vorrichtungen,
- wobei das Verwaltungssystem einen Prozessor umfasst, der dazu konfiguriert ist, Daten von einer oder mehreren der Vorrichtungen zu empfangen, und
- diese Daten als Ausgabe zu klassifizieren, um die Vorrichtungen zu identifizieren, die durch eine Testaktivierung aktiviert wurden, die durch etwas anderes als eine Testaktivierung aktiviert wurden oder die gewartet, repariert oder ersetzt werden müssen; und
- wobei das Verwaltungssystem auch eine Benutzerschnittstelle umfasst, die dazu konfiguriert ist, die Datenausgabe durch den Prozessor anzuzeigen.

7. Steuerzentralensystem nach Anspruch 6, wobei die auf der Benutzerschnittstelle angezeigten Daten eines oder mehrere der Folgenden umfassen können: Identifikationsdaten, Standortdaten, Verlaufsdaten, Betriebsdaten und eine Warnung, die angibt, dass eine Vorrichtung Wartung, Reparatur oder Austausch oder Entfernung einer Kreatur aus dem Inneren oder in der Nähe der Vorrichtung erfordert.

8. Steuerzentralensystem nach 6 oder 7, wobei das System einen Sender zum Übertragen von Daten bezüglich einer Vorrichtung an einen Responder umfasst und wobei die Daten eines oder mehrere von Folgendem umfassen: Identifikationsdaten, Standortdaten, Verlaufsdaten, Betriebsdaten und eine Warnung, die angibt, dass eine Vorrichtung Wartung, Reparatur oder Austausch oder Entfernung einer Kreatur aus dem Inneren oder in der Nähe der Vorrichtung erfordert.

9. Verfahren zum automatischen und periodischen Testaktivieren einer Vorrichtung nach den Ansprüchen 1 bis 5, wobei die Vorrichtung ferner eine elektrische Stromversorgung und ein elektronisches Steuersystem umfasst, das durch die Stromversorgung gespeist wird, und wobei das Verfahren die folgenden Schritte umfasst:
Speisen des elektronischen Steuersystems (1) unter Verwendung der elektrischen Stromversorgung, und
Bewirken, dass das elektronische Steuersystem regelmäßig automatisch eine Testaktivierung einer oder mehrerer beweglicher Komponenten der Vorrichtung einleitet.

10. Verfahren nach Anspruch 9, wobei das elektronische Steuersystem (1) eine Testaktivierung erst einleitet, nachdem eine vorgegebene Zeit verstrichen ist, seit eine vorhergehende Aktivierung der Falle aufgetreten ist.

## Revendications

1. Dispositif comprenant
- un ou plusieurs composants mobiles et
- soit un appareil à réinitialisation automatique configuré pour piéger une créature cible, soit un appareil configuré pour distribuer automatiquement une substance à une créature cible et
- un système d'activation de test automatique configuré pour initier automatiquement une activation de test périodique du dispositif, dans lequel
- le système d'activation de test automatique comprend :
- une alimentation électrique ; et
- et un système de commande électronique (1) alimenté par l'alimentation électrique, le dispositif étant **caractérisé en ce que**
- le système de commande électronique (1) est configuré pour activer automatiquement le dispositif pour tester le fonctionnement des un ou plusieurs composants mobiles, en activant ces composants mobiles
et dans lequel le système de commande électronique est configuré pour activer automatiquement le dispositif périodiquement sur la base de la sortie d'une minuterie ou d'instructions programmées ou des deux.

2. Dispositif selon la revendication 1, dans lequel le système de commande électronique (1) comprend une mémoire (32) configurée pour stocker des données relatives à chaque activation du dispositif.

3. Dispositif selon la revendication 1 ou 2, dans lequel le dispositif comprend un émetteur configuré pour transmettre des données relatives à chaque activation du dispositif.

4. Dispositif selon la revendication 3, dans lequel le système de commande électronique (1) est programmé pour amener l'émetteur à transmettre des données relatives à chaque activation à des périodes de temps prédéterminées ou après qu'un nombre prédéterminé d'activations se sont produites ou les deux.

5. Dispositif selon l'une quelconque des revendications 2 à 4, dans lequel le système de commande électronique comprend un dispositif d'imagerie numérique, et
le système de commande électronique (1) est configuré pour amener le dispositif d'imagerie numérique à prendre au moins une image numérique d'une zone proche du dispositif à proximité avant, pendant ou à proximité après une activation de test et, soit le système de commande électronique (1) est configuré pour stocker l'au moins une image numérique dans la mémoire (32), ou le dispositif comprend en outre un processeur configuré pour traiter l'au moins une image numérique et un émetteur configuré pour transmettre l'au moins une image traitée à un dispositif externe.

6. Système de centre de commande comprenant
- au moins deux dispositifs selon l'une quelconque des revendications 1 à 5 et
- un système de gestion pour gérer lesdits au moins deux dispositifs,
- dans lequel le système de gestion comprend un processeur configuré pour recevoir des données d'un ou plusieurs desdits dispositifs et
- pour classer ces données en sortie afin d'identifier lesdits dispositifs qui ont été activés par une activation de test, qui ont été activés par autre chose qu'une activation de test ou qui nécessitent une maintenance, une réparation ou un remplacement ; et
- dans lequel le système de gestion comprend également une interface utilisateur configurée pour afficher les données fournies par le processeur.

7. Système de centre de commande selon la revendication 6, dans lequel les données affichées sur l'interface utilisateur peuvent comprendre un ou plusieurs des éléments suivants : - des données d'identification, des données de localisation, des données historiques, des données opérationnelles et une alerte indiquant qu'un dispositif nécessite une maintenance, une réparation ou un remplacement, ou le retrait d'une créature à l'intérieur ou à proximité du dispositif.

8. Système de centre de commande selon 6 ou 7, dans lequel le système comprend un émetteur pour transmettre des données relatives à un dispositif à un répondeur et dans lequel les données comprennent une ou plusieurs parmi : - des données d'identification, des données de localisation, des données historiques, des données opérationnelles et une alerte indiquant qu'un dispositif nécessite une maintenance, une réparation ou un remplacement, ou le retrait d'une créature à l'intérieur ou à proximité du dispositif.

9. Procédé de test automatique et périodique d'activation d'un dispositif selon les revendications 1 à 5, dans lequel le dispositif comprend en outre une alimentation électrique et un système de commande électronique alimenté par l'alimentation, et dans lequel le procédé comprend les étapes :
d'alimentation du système de commande électronique (1) à l'aide de l'alimentation électrique, et
le fait d'amener le système de commande électronique à initier automatiquement une activation de test d'un ou plusieurs composants mobiles du dispositif sur une base périodique.

10. Procédé selon la revendication 9, dans lequel le système de commande électronique (1) lance une activation de test uniquement après qu'un temps prédéterminé s'est écoulé depuis qu'une activation précédente du piège s'est produite.
